# EUROPÄISCHE PATENTSCHRIFT

(11) **EP 3 486 378 B1**
(45) Veröffentlichungstag und Bekanntmachung des Hinweises auf die Patenterteilung: **26.05.2021**
(21) Anmeldenummer: 18207544.0
(22) Anmeldetag: 21.11.2018
(51) Int. Cl.: E02D 5/04, E02D 5/06, F24D 3/18

(54) **SPUNDWAND ZUR WÄRMEGEWINNUNG**
SHEET PILE WALL FOR HEAT RECOVERY
RIDEAU DE PALPLANCHES POUR RÉCUPÉRATION DE CHALEUR

(30) Priorität: 21.11.2017 DE 202017006008 U
(43) Veröffentlichungstag der Anmeldung: 22.05.2019
(73) Patentinhaber: SPS Energy, 56593 Horhausen (DE)
(72) Erfinder: Schmitt, Peter, 56593 Horhausen (DE); Semmling, Torsten, 06571 Rossleben (DE)
(74) Vertreter: dompatent von Kreisler Selting Werner - Partnerschaft von Patent- und Rechtsanwälten mbB

(56) Entgegenhaltungen:
- EP-A1- 0 019 071
- EP-A1- 2 374 942
- DE-A1- 4 211 576
- JP-A- 2015 113 645

## Beschreibung

Die Erfindung betrifft eine Spundwand zur Wärmegewinnung aus der Umgebung insbesondere zur Montage an Spundwandbauwerken und im Stahlwasserbau.

Der Einsatz von Spundwänden im Wasser- und Tiefbau ist bekannt. Spundwände dienen zur Sicherung von Baugruben oder Geländevorsprüngen und können zugleich eine Dichtungsfunktion übernehmen, so dass auch eine Abdichtung gegen Wasser oder kontaminiertes Erdreich möglich ist. Im Wasserbau können die Spundwände beispielsweise als Kaimauern, Dockbauwerke für Wasserstraßen und für Ufersicherungen verwendet werden.

Eine Spundwand besteht aus einzelnen Spundwandelementen, die in den Boden gerammt, gepresst oder gerüttelt werden. Die Spundwandelemente bestehen zumeist aus Stahl. Die einzelnen Spundwandelemente, aus denen eine Spundwand besteht, können miteinander durch ineinandergreifende Schlösser verbunden werden, so dass ein zusammenhängendes Spundwandbauwerk gebildet werden kann. Beim Rammen wird jedes Spundwandelement durch das Schloss des zuletzt gerammten Spundwandelementes seitlich geführt und mit ihr kraftschlüssig verbunden. Es existieren verschiedene Spundwandelemente unterschiedlicher Hersteller. Gängige Spundwandelemente sind beispielsweise U- und Z-Profile in den Längen von ca. 3,0 m bis 30 m lieferbar. Darüber hinaus sind Spundwandelemente als Peiner oder Doppel-T-Träger bekannt sowie Rohrspundwandelemente.

Spundwände werden auch dauerhaft als Bauelement im Tief- und Wasserbau für Kaimauern, Schleusenwände, Kanäle, Molen oder Hafenbecken eingesetzt, sowie in Schlitzwänden und beim Hochwasserschutz in Deichbauwerke eingestellt.

Aus der DE 2819737 sind Spundwände aus Spundwandelementen unterschiedlicher Profilierungen bekannt.

Spundwände werden bevorzugt eingesetzt, da sie kostengünstig produziert und eingebaut werden können und zudem noch wartungsfrei und langlebig sind.

Es ist ferner bekannt, mit Hilfe von Wärmepumpen in Kombination mit einer thermischen Aktivierung der Spundwandbauwerke in der Umgebung vorhandene Energie zu sammeln und als Heizwärme oder Wärme für die Warmwasserbereitung zu nutzen.

Außerdem sind Wärmerohre als Wärmeübertrager bekannt, die unter Nutzung von Verdampfungswärme eines Stoffes eine hohe Wärmestromdichte erlauben. Zur Bewegung des Wärme-Transportmediums (Arbeitsfluid) benötigen Wärmerohre keine zusätzliche Hilfsenergie wie zum Beispiel eine Umwälzpumpe, so dass sich dadurch Wartungsaufwand und Betriebskosten minimieren.

Wärmerohre sind als Heatpipes oder auch als zwei-Phasen-Thermosiphone bekannt.

Wärmerohre enthalten grundsätzlich einen hermetisch gekapselten Hohlraum, meistens in Form eines Rohres. Der Hohlraum ist mit einem Wärmetransportmedium gefüllt, das das Volumen in dem Hohlraum zu einem kleineren Teil in flüssigem, zum größeren Teil im dampfförmigen Zustand ausfüllt.

Der Einsatzbereich eines Wärmerohrs beschränkt sich auf den Bereich zwischen der Schmelztemperatur und der Temperatur des kritischen Punkts des verwendeten Arbeitsfluids. Die EP 2 374 942 A zeigt eine gattungsgemäße Spundwand mit den Merkmalen des Oberbegriffs des Anspruchs 1.

Der Erfindung liegt die Aufgabe zugrunde, eine Vorrichtung zur Gewinnung regenerativer Wärme aus der Umwelt zu schaffen.

Die Aufgabe wird gelöst durch die Spundwand gemäß Anspruch 1, sowie durch das Verfahren gemäß Anspruch 9.

Die erfindungsgemäße Spundwand zur Wärmegewinnung aus der Umgebung insbesondere Einsatz im Tief- und Wasserbau weist ein Thermoelement auf und ein mit dem Thermoelement verbundenes Verbindungselement. Dabei ist das Verbindungselement ausgebildet zur Verbindung mit einem im Erdreich verankerten Spundwandelement insbesondere einer Spundwand. Durch das Thermoelement in Verbindung mit der Stahlspundwand werden dem umgebenden Baugrund bzw. Erdreich sowie dem zirkulierenden Wasser Wärmeenergie entzogen und insbesondere mittels einer Wärmepumpe auf ein nutzbares Niveau gehoben.

Die Erfindung schafft in vorteilhafter Weise eine Vorrichtung zur Gewinnung regenerativer Wärmeenergie aus der Umwelt mit Hilfe eines Thermoelements, die beispielsweise in/oder unmittelbar an Gewässern wie Kanälen, Staubecken, Flüssen Seen oder Meeren eingesetzt werden können. Die aus dem Wasser oder dem Erdreich entzogene Wärmeenergie wird über einen Wärmetauscher an eine Wärmepumpe weitergeleitet.

Ein wesentlicher Vorteil einer solchen Wärmegewinnungsanlage besteht darin, dass ohnehin vorhandene Stahlbauteile dazu genutzt werden können, mit ihrer großen Kollektorfläche sowie ihrer sehr guten Wärmeleitung der Umgebung Wärmeenergie zu entziehen. Da die Spundwände insbesondere durch nachträgliches Vorsehen von Thermoelementen sogar noch höhere Festigkeiten erzielen, ist die mechanische Stabilisierung von beispielsweise Ufern, Untergründen, Gewässerschutzbauten und Dämmen nicht nur im vollen Umfang gewährleistet, sondern erfüllt sogar erhöhte Auslegungsanforderungen.

Durch die Wärmegewinnung insbesondere aus Wasser können die Gewässertemperaturen reduziert werden und damit beispielsweise Temperaturanstiege in Gewässern durch Abwassereinleitungen oder dergleichen kompensiert werden.

Auch bei Hochwasserschutzanlagen lässt sich ein wirtschaftlicher Vorteil dadurch erzielen, dass neben der Sicherungsfunktion mit den Bauelementen zusätzlich eine Energiegewinnung möglich ist.

Erfindungsgemäß handelt es sich bei dem Thermoelement um ein Wärmerohr oder einen Wärmetauscher.

Durch den Wärmetauscher wird ein unterkühltes Transportfluid umgepumpt, welches dem umgebenden Wasser sowie dem Baugrund Wärmeenergie entzieht und durch die Wärmepumpe auf ein nutzbares Niveau angehoben wird.

Vorzugsweise besteht das Wärmerohr aus einer CO₂-Heatpipe. Heatpipes weisen ein ausgezeichnetes Wärmetransportvermögen auf. Bevorzugt wird CO₂ als Wärmetransportmedium (Arbeitsfluid) wegen der biologischen Unbedenklichkeit eingesetzt.

Vorzugsweise enthält das mindestens eine Wärmerohr ein Wärmetransportmedium für den Temperaturbereich zwischen -10° Celsius und +40° Celsius.

Die thermodynamische Auslegung dieser Heatpipes erfolgt derart, dass die beiden thermodynamischen Vorgänge, nämlich der Verdampfungs- und Kondensationsprozess, in dem geschlossenen System ohne Umwälzpumpe und ohne Fremdenergie ablaufen können. Die Heatpipes erfüllen reine Kondensatorzwecke und sind hierfür ausgelegt und optimiert.

Das Wärmerohr oder der Wärmetauscher können auch aus einem im Querschnitt runden oder quaderförmigen Rohr gebildet sein.

Vorzugsweise besteht das Thermoelement und insbesondere der Wärmetauscher aus Nichteisenmetallen, Kunststoff oder Stahllegierungen, insbesondere Edelstahl.

Vorzugsweise ist das Thermoelement im sich ausschließlich im Wasser befindlichen Bereich des Spundwandelements auf der dem Wasser zugewandten Seite angeordnet. Somit ist das Thermoelement im Wesentlichen von Wasser umgeben, wobei ein Teil des Thermoelements über die Wasserlinie hinausragen kann. Alternativ hierzu ist das Thermoelement im sich im Erdreich befindlichen Bereich des Spundwandelements insbesondere auf der dem Wasser abgewandten Seite angeordnet. Somit befindet sich das Thermoelement im Erdreich, wird von diesem umgeben und geschützt, so dass das Thermoelement Wärmeenergie aus dem Erdreich unmittelbar entziehen kann. Ist eine Seite des Spundwandelements im Kontakt mit Wasser, kann das Thermoelement auch auf der dem Wasser abgewandten Seite angeordnet werden. Da hierbei die Temperatur des Erdreichs beeinflusst wird durch die Temperatur des Wassers, kann somit sowohl dem Erdreich direkt, als auch dem Wasser indirekt Wärmenergie entzogen werden. Ist dagegen das Spundwandelement auf beiden Seiten von Erdreich umgeben, kann das Thermoelement auf einer der beiden Seiten des Spundwandelements im Erdreich angeordnet sein.

Vorzugsweise ist das Thermoelement im sich im Wasser befindlichen Bereich und sich im Erdreich befindlichen Bereich des Spundwandelements auf der dem Wasser zugewandten Seite angeordnet. Das Thermoelement ist somit gleichzeitig im Wasser, als auch im Erdreich angeordnet, indem es sich durch den Grund des Wassers in das Erdreich erstreckt. Somit kann eine möglichst große Fläche geschaffen werden zur Aufnahme der Wärmeenergie insbesondere auch in flachen Gewässern. Dabei ist insbesondere mindestens ein Drittel des Thermoelements über dem Grund angeordnet. Erstreckt sich das Thermoelement in vertikaler Richtung entlang des gesamten Spundwandelements, wird hierdurch sichergestellt, dass das Spundwandelement ausreichend stabil im Erdreich verankert ist.

Vorzugsweise weist die Vorrichtung mehr als ein Thermoelement auf, so dass effizient Wärme dem umgebenden Wasser entzogen werden kann. Hierbei ist es insbesondere möglich, unterschiedliche Arten von Thermoelementen miteinander zu kombinieren, so dass beispielsweise in einer Ausführungsform der Vorrichtung diese sowohl ein Wärmerohr als auch einen Wärmetauscher aufweist.

Vorzugsweise ist das Verbindungselement ausgebildet, so dass das Thermoelement beweglich verbindbar ist mit dem Spundwandelement, wobei eine Änderung der vertikalen Position des Thermoelements erfolgt in Abhängigkeit des Wasserpegels. Dabei kann beispielsweise die Verbindung mittels einer vertikalen Schiene erfolgen, in der das Thermoelement relativ zu dem jeweiligen Spundwandelement in vertikaler Richtung verschiebbar ist. Die Veränderung der vertikalen Position erfolgt dabei beispielsweise mechanisch, insbesondere durch einen Stellmotor, hydraulisch oder durch ein schwimmfähiges Gegengewicht. Insbesondere ist die Vorrichtung schwimmfähig durch geeignete Auftriebskörper oder dergleichen, so dass bei einer Pegeländerung automatisch eine Anpassung der vertikalen Position erfolgt. Somit wird sichergestellt, dass das Thermoelement unabhängig vom Pegel von Wasser umgeben ist, so dass diesem Wärme entzogen werden kann.

Vorzugsweise ist das Verbindungselement ausgebildet, so dass die Vorrichtung mit dem Spundwandelement verbindbar ist, wobei die Vorrichtung beabstandet von dem Spundwandelement anordenbar ist. Somit weist das Thermoelement einen Abstand von dem Spundwandelement bzw. der Spundwand auf. Hierdurch wird gewährleistet, dass das Thermoelement von allen Seiten von Wasser umspült wird, wodurch dem Wasser effizient Wärme entzogen werden kann.

Vorzugsweise ist die Breite des Thermoelements, also die Erstreckung in horizontaler Richtung im eingebauten Zustand, größer als die Breite eines Spundwandelements. Insbesondere ist das Thermoelement mit mehr als einem Spundwandelement gleichzeitig verbunden und erstreckt sich über eine Vielzahl von Spundwandelementen. Somit ist es möglich ein einzelnes oder nur eine geringe Anzahl an Thermoelementen vorzusehen, wodurch bei einer Nachrüstung einer bereits bestehenden Spundwand der Arbeitsaufwand reduziert werden kann.

Erfindungsgemäß ist das Verbindungselement ausgebildet zum nachträglichen Verbinden mit einem Spundwandelement bzw. einer Spundwand.

Vorzugsweise erfolgt das nachträgliche Verbinden der Vorrichtung mit dem Spundwandelement durch Anschweißen. Hierbei wird die Vorrichtung an die bereits installierten Spundwandelemente einer Spundwand angeschweißt und somit dauerhaft mit dem Spundwandelement verbunden.

Erfindungsgemäß ist mindestens ein Verbindungselement als Haken ausgebildet, wobei das Verbinden der Vorrichtung mit dem Spundwandelement durch Einhaken des Hakens mit einer Öse an dem Spundwandelement erfolgt. Selbstverständlich können Haken und Öse auch vertauscht sein, so dass mindestens ein Verbindungselement als Öse ausgebildet ist.

Alternativ ist erfindungsgemäß mindestens ein Verbindungselement als Schiene ausgebildet, wobei das Verbinden mit dem Spundwandelement durch Einschieben der Schiene in eine Schienenführung an dem Spundwandelement erfolgt. Selbstverständlich ist ein nachträgliches und zusätzliches Verschweißen möglich. Diese Führungsschienen nehmen die Thermoelemente auf und fixieren sie insbesondere unterhalb des Wasserspiegels.

Vorzugsweise ist eine Vielzahl von Verbindungselementen vorgesehen zur sicheren Verbindung der Vorrichtung mit bereits installierten Spundwandelementen einer Spundwand.

Vorzugsweise erstreckt sich die Vorrichtung über mindestens ein Drittel, besonders bevorzugt mindestens zwei Drittel des aus dem Boden ragenden Teils des Spundwandelements. Für die Wärmegewinnung steht dennoch die gesamte Spundwandfläche zur Verfügung, die sich im Kontakt mit dem Wasser oder dem Erdreich befindet, aufgrund von Wärmeleitung. Insbesondere erstreckt sich die Vorrichtung jedoch über die gesamte Länge des jeweiligen Spundwandelements.

Vorzugsweise ist ein Schutzelement vorgesehen zum Schutz des Thermoelements, wobei das Thermoelement zumindest teilweise zwischen Schutzelement und Spundwandelement angeordnet ist. So wird verhindert, dass eine Beschädigung des Thermoelements auftritt, beispielsweise durch Treibgut oder Schiffe.

Vorzugsweise handelt es sich bei dem Schutzelement um ein Lochblech. Alternativ oder zusätzlich hierzu handelt es sich bei dem Schutzelement um ein weiteres Spundwandelement oder eine weitere Spundwand, welches beabstandet von dem Spundwandelement angeordnet ist, mit dem die Vorrichtung verbunden ist.

Vorzugsweise sind das Thermoelement und das Verbindungselement mittels dem Schutzelement miteinander verbunden. So ist das Thermoelement mit dem Schutzelement beispielsweise durch Schweißen verbunden, und ebenso ist das Verbindungselement mit dem Schutzelement beispielsweise durch Schweißen verbunden, so dass eine einteilige und stabile Vorrichtung erreicht wird.

Vorzugsweise sind alle Thermoelemente einer Spundwand mit einer Wärmepumpe verbunden.

Nachfolgend wird die Erfindung anhand bevorzugter Ausführungsformen unter Bezugnahme auf die beigefügten Zeichnungen näher erläutert.

Es zeigen
Fig. 1 eine Spundwand im Bereich des Wasserbaus gemäß einer Ausführungsform der vorliegenden Erfindung,
Fig. 2 eine Spundwand im Bereich des Wasserbaus gemäß einer weiteren Ausführungsform der vorliegenden Erfindung,
Fig. 3a bis 3e eine Detailansicht der Spundwand in Draufsicht gemäß einer weiteren Ausführungsform der vorliegenden Erfindung,
Fig. 4 eine Detailansicht eines Spundwandelements in Seitenansicht gemäß einer weiteren Ausführungsform der vorliegenden Erfindung,
Fig. 5 eine Detailansicht eines Spundwandelements in Draufsicht gemäß einer weiteren Ausführungsform der vorliegenden Erfindung,
Fig. 6 eine Detailansicht einer vorgesetzten zweiten Spundwand in Draufsicht gemäß einer weiteren Ausführungsform der vorliegenden Erfindung und
Fig. 7 eine Detailansicht einer Spundwand in Seitenansicht gemäß einer weiteren Ausführungsform der vorliegenden Erfindung.

Um die in einem Gewässer 10 gespeicherte Wärme zu nutzen, ohne wassergefährdende Medien zu verwenden, gleichzeitig aber die hohe Effizienz der Wärmepumpentechnologie zu nutzen, ist es möglich, an einer Spundwand 2 Vorrichtungen zur Wärmegewinnung aus der Umgebung oberflächennah in offene Gewässer 10 und/oder in deren Nähe und im hydrologischem Regime einzusetzen.

Spundwandelemente 4 für eine Spundwand 2 sind beispielsweise als Peiner Stahlspundwände bekannt (s. Lieferprogramm der Firma ARCELOR bzw. "Peiner Stahlspundwände 3/02 der HSP Hoesch Spundwand und Profil GmbH). In diesen Firmenprospekten werden gewalzte Spundwandelemente 4 je nach Ausführungsform wasserdicht verriegelbar angeboten, die über Spundwandschlösser 42 miteinander verbunden werden können.

Diese Spundwandelemente 4 dienen unter anderem zur Stützung von Geländesprüngen und zur Sicherung von Baugruben, Deichen, Dämmen und Hafenanlagen. Sie müssen hierbei große horizontale Kräfte aufnehmen können, die zu einer entsprechenden Biegebelastung der Spundwände 2 senkrecht zu dem Verlauf der Spundwandelemente 4 führen. Maßgebend für die Bemessung ist im Regelfall die vom Spundwandelement 4 über das Widerstandsmoment aufnehmbare Biegebelastung aus dem seitlichen Erd- und/oder Wasserdruck. Je nach aufzunehmender Belastung können diese Spundwandelemente 4 über die Verbindungsschlösser 42 derart mit gleichartigen Spundwandelementen 4 verbunden werden, so dass eine geschlossenes Spundwandbauwerk 2 aus einzelnen Spundwandelementen 4 mit hohem Widerstandsmoment hergestellt werden kann, oder sie können für eine Spundwandbauwerk 2 mit unterschiedlichen Spundwandelementen 4 verwendet werden, wobei über das Verbindungsschloss 42 beispielsweise U- oder Z-förmige Elemente aneinander gereiht, oder ebenso auch mit Rohren bzw. Peinern kombiniert werden können.

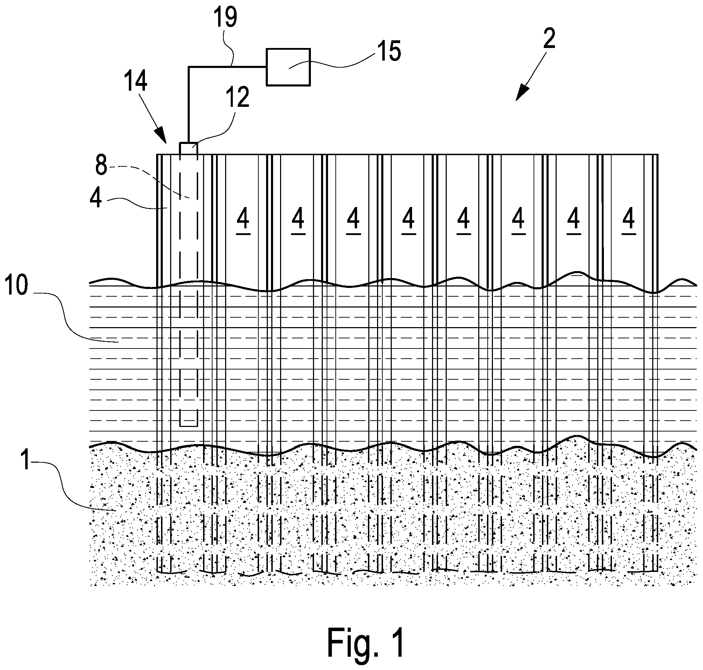

Figur 1 zeigt eine Spundwand 2 aus mehreren miteinander verriegelbaren Spundwandelementen 4, die im Untergrund oder Erdreich 1 verankert sind. Die einzelnen Spundwandelemente 4 sind mit einem Schloss 42 miteinander verriegelt, wobei sie auch eine dichte Spundwand 2 bilden können, die gegen das Wasser 10 abdichtet.

Die Figur 1 ist lediglich schematisch. Typischerweise befindet sich eine derartige Spundwand 2 zu ca. 2/3 im Erdreich 1 und ca. 1/3 ihrer Länge befindet sich im Wasser 10.

Mit der Spundwand 2 bzw. den einzelnen Spundwandelementen 4 sind vorzugsweise Vorrichtungen 14 verbunden, welche ein Thermoelement 8 aufweisen, das insbesondere wärmeleitend mit dem Spundwandelement 4 gekoppelt ist. Die Vorrichtung 14 ist dabei ein selbständiges Bauteil, das nachträglich mit dem Spundwandelement 4 verbunden werden kann. Durch die erfindungsgemäße Vorrichtung 14 ist es insbesondere möglich, bereits vorhandene und installierte Spundwände 2 an Flüssen und Meeren mit begrenztem technischem Aufwand nachträglich und technisch in einfacher Weise nachzurüsten, damit diese kostengünstig und umweltverträglich genutzt werden zur Wärmegewinnung. Damit können wirtschaftlich und technisch effiziente, emissionsfreie Anlagen geschaffen werden, die auch bei langfristigem Betrieb ohne Störung und ohne Umweltbeeinträchtigung arbeiten.

Alternativ hierzu ist das jeweilige Thermoelement 8 fest und einteilig mit dem jeweiligen Spundwandelement 4 verbunden, wodurch Spundwandelement 4 und Thermoelement 8 gleichzeitig aufgestellt bzw. installiert werden.

Das Thermoelement 8 entzieht über die Spundwandelemente 4 und zwar vorzugsweise über die gesamte Fläche eines Spundwandelements 4, dem Wasser 10 und/oder dem Erdreich 1 Wärmeenergie. Die an dem wärmeren Ende des Thermoelements 8 gesammelte Wärmeenergie wird über einen Wärmetauscher 12 und/oder eine Leitung 19 an eine Wärmepumpe 15 weitergeleitet.

Dabei ist das Thermoelement 8 als Wärmerohr oder Wärmetauscher ausgebildet. Ein solches Wärmerohr besteht aus einer druckfesten Metallkonstruktion, welche nach vorgegebenen thermischen Entzugsleistungen sowie statischen Erfordernissen dimensioniert und gefertigt wird. Insbesondere ist das Wärmerohr ausgebildet als CO₂-Heatpipe oder mit einem technisch gleichwertigen Wärmetransportmedium befüllten Wärmerohr. Das Wärmetransportmedium in dem Wärmerohr ist für einen Betriebsbereich zwischen ca. -10°C und +40°C ausgelegt und besteht vorzugsweise aus CO₂.

Alternativ hierzu kann das Thermoelement als Wärmetauscher ausgebildet sein. Bei einem Wärmetauscher wird ein Wärmetransportmedium (Arbeitsfluid) umgewälzt und so der Umgebung Wärme entzogen. Bei dem Arbeitsfluid handelt es sich beispielsweise um Glykol oder Sole, welches kostengünstig bereitgestellt werden kann. Durch den Einsatz von Glykol oder Sole kann auch bei eventuellen Leckagen der Vorrichtung keine Gefährdung für das Gewässer entsteht.

Nachfolgend werden gleiche oder ähnliche Bauteile mit den gleichen Bezugszeichen gekennzeichnet.

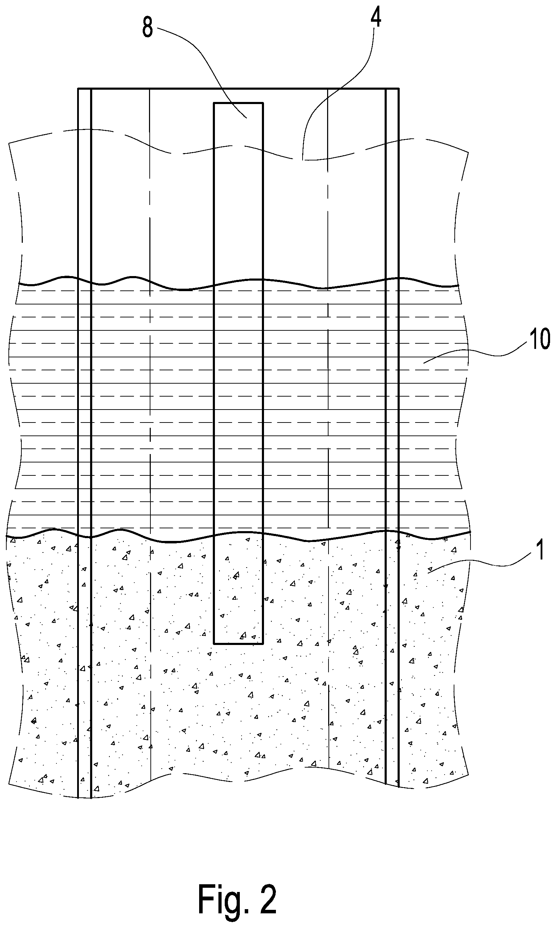

Fig. 2 zeigt eine weitere Ausführungsform, bei der sich das Thermoelement 8 sowohl im Wasser 10, als auch im darunterliegenden Erdreich 1 befindet. Die Vorrichtung erstreckt sich somit durch den Grund in das Erdreich 1 und ist somit in der Lager Wärmeenergie unmittelbar auch dem Erdreich 1 zu entziehen.

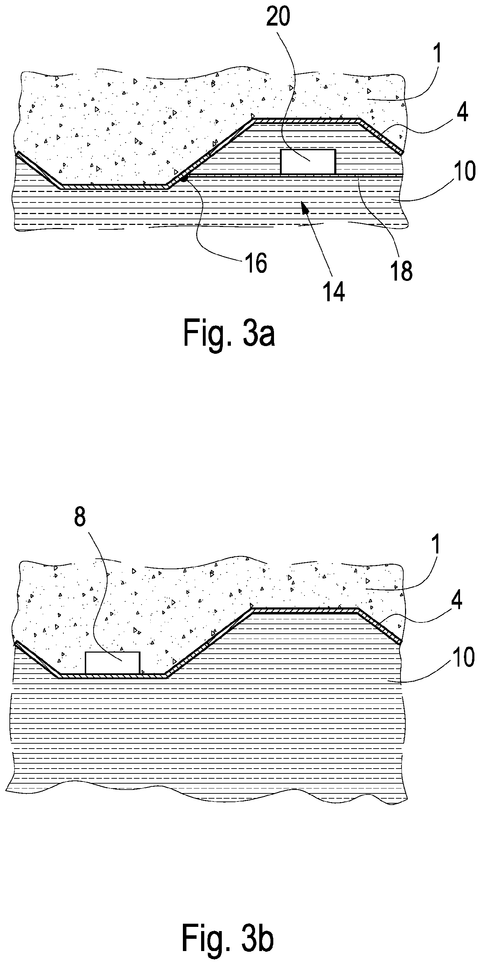

Fig. 3a zeigt eine bevorzugte Ausführungsform der Vorrichtung 14 im nachgerüsteten Zustand. Dabei weist die Vorrichtung 14 ein Verbindungselement 16 auf, mit dem die Vorrichtung 14 nachträglich mit der bereits installierten Spundwand 4 verbunden werden kann. Im dargestellten Ausführungsbeispiel folgt dies durch Schweißen. Dabei wird ein Schutzelement 18, welches insbesondere ausgebildet ist als Lochblech, mit dem Spundwandelement 4 verschweißt. Mit dem Schutzelement 18 ist ein Thermoelement, ausgebildet als Wärmerohr 20, verbunden. Durch das Wärmerohr 20 wird dem das Wärmerohr 20 umgebende Wasser 10 Wärmeenergie entzogen und zur Wärmepumpe über einen Wärmetauscher geleitet. Das Thermoelement ist dabei auf der dem Wasser zugewandten Seite der Spundwand bzw. des Spundwandelements angeordnet.

Fig. 3b zeigt eine alternative Ausführungsform, bei dem das Thermoelement 8 auf der dem Wasser 10 abgewandten Seite im Bereich des Erdreichs 1 angeordnet ist und somit dem Erdreich 1 unmittelbar Wärmeenergie entzieht. Selbstverständlich kann eine Spundwandelement 4 und insbesondere eine Spundwand 2 Thermoelemente 8 auf beiden Seiten aufweisen um eine optimale Wärmeübertragung zu erreichen.

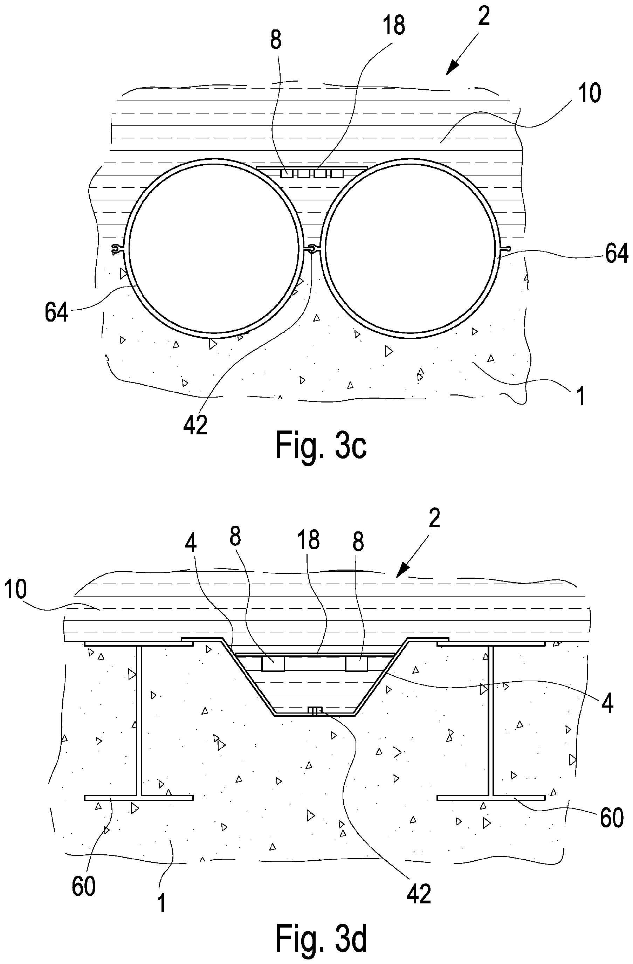

Fig. 3c zeigt eine alternative Ausführungsform, bei der aus Rohrelementen 64 als Spundwandelemente eine Spundwand 2 gebildet wird. Zwischen zwei solchen Rohrelementen 64 sind ein oder mehrere Thermoelemente 8 mittels einem Schutzelement 18 wie vorstehend beschrieben angeordnet. Das Anbringen der Thermoelemente 8 kann dabei auch nachträglich erfolgen. Die Thermoelemente 8 können dabei entsprechend der Fig. 3c auf der dem Wasser zugewandten Seite der Spundwand 2 angeordnet sein. Alternativ oder zusätzlich hierzu können ein oder mehrere Thermoelemente auch auf der dem Wasser abgewandten Seite der Spundwand angeordnet sein.

Fig. 3d zeigt eine alternative Ausführungsform, bei der die Spundwand 2 aus Peinern 60 gebildet werden, wobei zwischen den Peinern 60 Spundwandelemente 4 angeordnet sind. Diese Spundwandelemente 4 sind als Z-Profile in dem Beispiel der Fig. 3d gezeigt. Mit den Spundwandelementen sind mittels dem Schutzelement 18 Thermoelemente 8 verbunden.

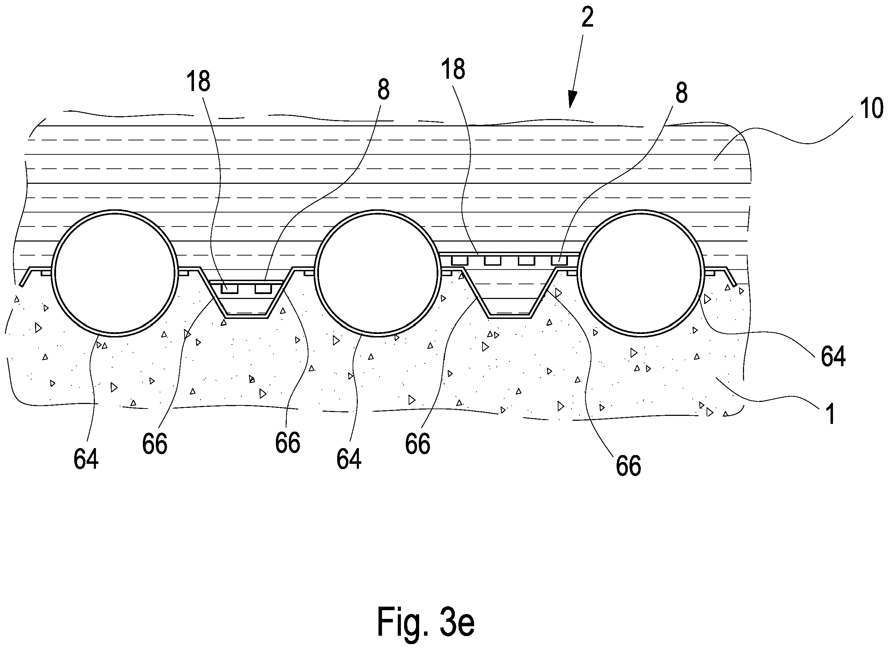

Fig. 3e zeigt eine alternative Ausführungsform, bei der Rohrelemente 64 und Z-Profile 66 als Spundwandelemente 4 abwechselnd angeordnet sind. Dabei sind im Beispiel der Fig. 3e Thermoelemente 8 mittels dem Schutzelement 18 auf die Z-Profile 66 aufgesetzt oder zwischen den Z-Profilen 66 angeordnet. In beiden dargestellten Fällen kann das Thermoelement 8 beweglich mit dem jeweiligen Spundwandelement verbunden sein, so dass sich die vertikale Position des Thermoelements 8 an den umgebenden Wasserspiegel anpassen kann. Die Thermoelemente 8 können dabei entsprechend der Fig. 3e auf der dem Wasser zugewandten Seite der Spundwand 2 angeordnet sein. Alternativ oder zusätzlich hierzu können ein oder mehrere Thermoelemente auch auf der dem Wasser abgewandten Seite der Spundwand angeordnet sein, insbesondere falls die Thermoelemente 8 zwischen den Z-Profilen 66 angeordnet sind.

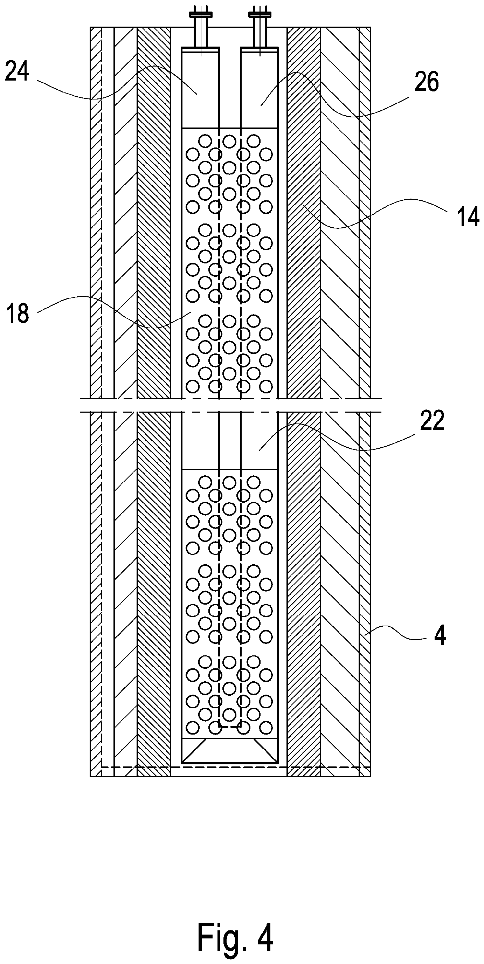

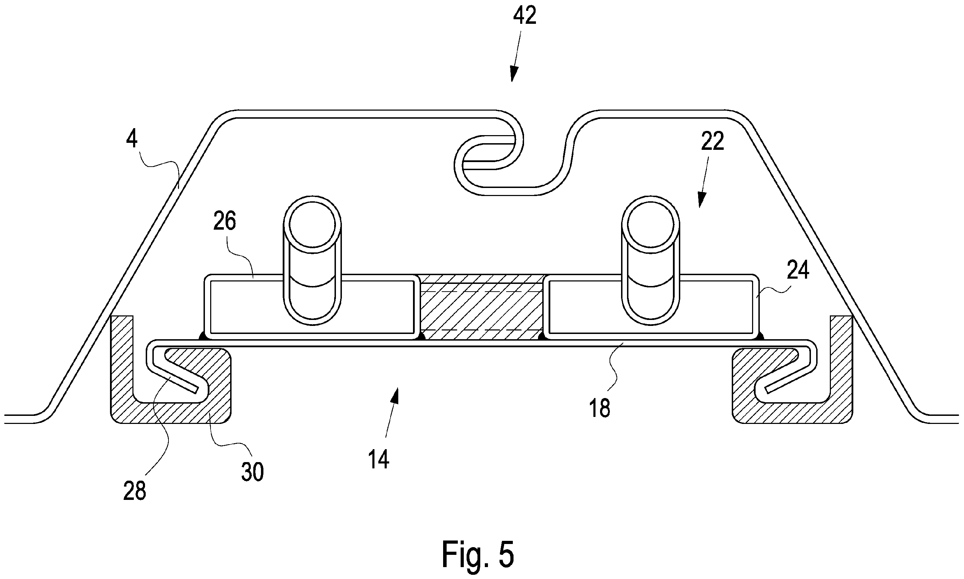

In dem in Fig. 4 dargestellten Ausführungsbeispiel ist das Thermoelement ausgebildet als Wärmetauscher 22 und weist somit einen Vorlauf 24 und einen Rücklauf 26 auf. Durch den Vorlauf 24 wird kühleres Wärmetransportmedium (Arbeitsfluid) eingeleitet, welches durch das die Vorrichtung 14 umgebende Wasser erwärmt wird. Das wärmere Arbeitsfluid gelangt über den Rücklauf 26 zur Wärmepumpe 15. Dabei ist der Wärmetauscher 22 zumindest teilweise zwischen dem Spundwandelement 4 und dem Schutzelement 18 angeordnet. Die Vorrichtung 14 weist Verbindungselemente 28 auf, welche als Schienenelemente (Fig. 5) ausgebildet sind. Diese werden in mit dem Spundwandelement 4 verbundene Schienenführungen 30 eingeschoben, wodurch die Vorrichtung 14 mit dem Spundwandelement 4 verbunden wird. Zur Nachrüstung der Vorrichtung 14 ist es somit an bereits installierten Spundwänden 2 erforderlich, lediglich die Schienenführungen 30 an dem jeweiligen Spundwandelement 4 zu befestigen. Nachfolgend erfolgt ein Einschieben der Vorrichtung 14. Selbstverständlich kann ein dauerhaftes Fixieren der Vorrichtung 14 in den Schienenelementen des Spundwandelements 4 beispielsweise durch nachträgliches Verschweißen erfolgen.

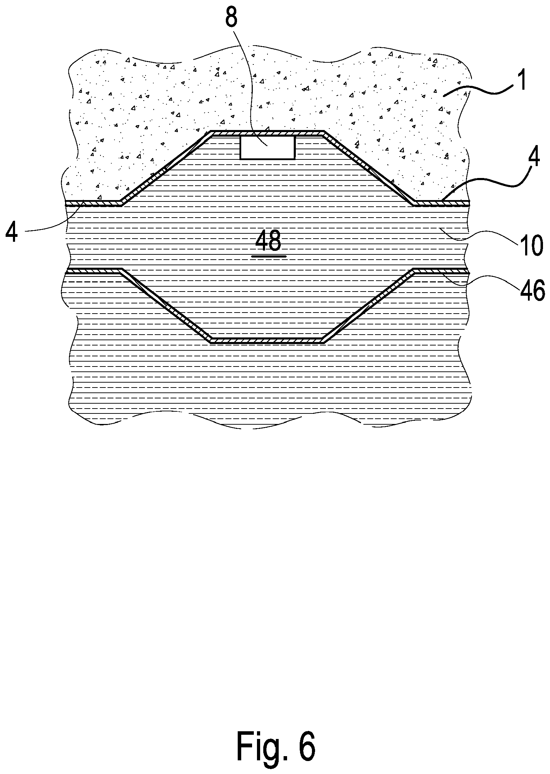

Fig. 6 zeigt eine alternative Ausführungsform, bei der das Schutzelement in Form einer zweiten vorgesetzten Spundwand 46 ausgebildet ist. Die zweite Spundwand 46 ist dabei beabstandet von der ersten Spundwand 4, mit der die Thermoelemente verbunden sind. Im Zwischenbereich 48 zwischen der Spundwand 4 und der das Schutzelement bildenden zweiten Spundwand befindet sich Wasser oder Verfüllmaterial. Durch den geringen Abstand der beiden Spundwandbauwerke 4 und 46 zueinander, wird Wärmeenergie über beide Spundwandbauwerke durch die Thermoelemente entzogen. Die Thermoelemente 8 sind dabei vor Beschädigung beispielsweise durch Schiffstoß geschützt.

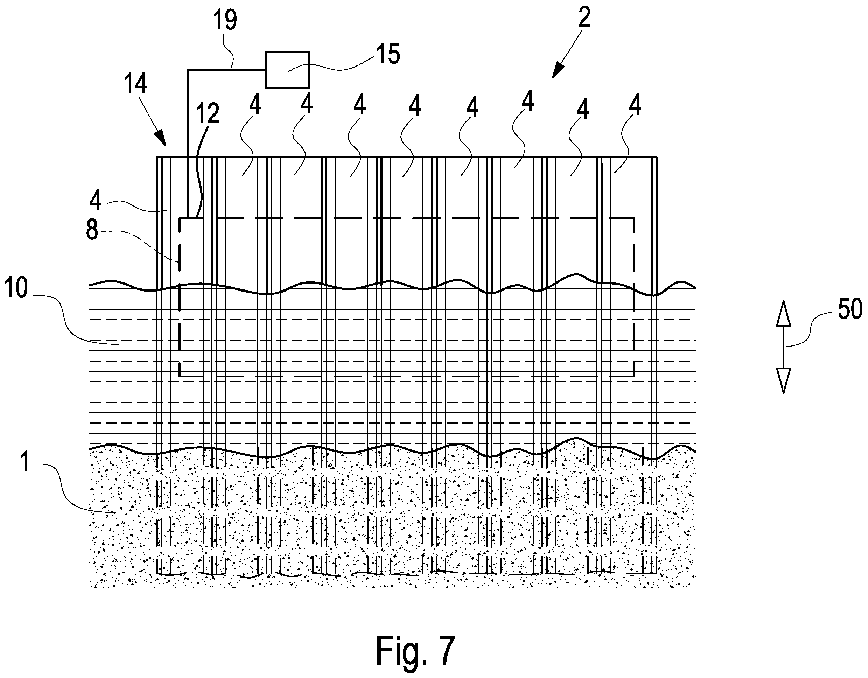

Fig. 7 zeigt eine weitere Ausführungsform, bei dem ein Thermoelement 8 sich über eine Vielzahl von Spundwandelementen 4 erstreckt. Das Thermoelement ist dabei mit mehr als einem Spundwandelement 4 der Spundwand 2 verbunden. Insbesondere ist das Thermoelement 8 der Fig. 7 beabstandet von der Spundwand angeordnet. Dabei ist das Thermoelement der Fig. 7 entsprechend dem Pfeil 50 in vertikaler Richtung bewegbar mit der Spundwand 2 verbunden. Die vertikale Position des Thermoelements 8 wird dabei an den Pegel bzw. den Wasserstand angepasst, so dass das Thermoelement stets nahezu vollständig oder zumindest größtenteils von Wasser umgeben ist, um diesem effizient Wärmeenergie entziehen zu können.

Somit ist eine Vorrichtung geschaffen, die auf einfache Weise an Spundwände angebracht werden kann, so dass wirtschaftlich und technisch effiziente, insbesondere emissionsfreie Anlagen geschaffen werden zur Erzeugung von Wärmeenergie.

## Patentansprüche

1. Spundwand (2) mit einer Vorrichtung (14) zur Wärmegewinnung aus der Umgebung insbesondere zum Einsatz im Tief- und Wasserbau, und mit mindestens einem Spundwandelement (4), wobei die Vorrichtung (14) ein Thermoelement (8) und ein mit dem Thermoelement (8) verbundenes Verbindungselement (16, 28) zur Verbindung mit dem im Erdreich verankerten Spundwandelement (4) aufweist, wobei das Thermoelement (8) im eingebauten Zustand dazu ausgebildet ist, dem das Thermoelement (8) und/oder dem das Spundwandelement (4) umgebende Wasser (10) oder Erdreich entzogene Wärmeenergie an eine Wärmepumpe (15) weiterzuleiten, und das Thermoelement ausgebildet ist als Wärmerohr (20) oder Wärmetauscher (22), **dadurch gekennzeichnet, dass**
mindestens ein Verbindungselement ( 28) ausgebildet ist als Haken und das Spundwandelement (4) eine Öse aufweist, wobei das Verbinden mit dem Spundwandelement (4) durch Einhaken des Hakens mit der Öse an dem Spundwandelement (4) erfolgt und/oder mindestens ein Verbindungselement (28) ausgebildet ist als Schiene, und das Spundwandelement (4) eine Schienenführung (30) aufweist, so dass das Verbinden mit dem Spundwandelement (4) durch Einschieben der Schiene in die eine Schienenführung (30) an dem Spundwandelement (4) erfolgt, wobei die Schiene im eingebauten Zustand beabstandet ist von einem Spundwandschloss (42) zur Verbindung von Spundwandelementen (4).

2. Spundwand nach Anspruch 1, **dadurch gekennzeichnet, dass** das Thermoelement aus Stahllegierungen, insbesondere Edelstahl, Nichteisenmetallen oder Kunststoff besteht.

3. Spundwand nach einem der Ansprüche 1 oder 2, **dadurch gekennzeichnet, dass** das Thermoelement (8) im sich ausschließlich im Wasser (10) befindlichen Bereich des Spundwandelements (4) auf der dem Wasser (10) zugewandten Seite angeordnet ist oder das Thermoelement (8) im sich im Erdreich befindlichen Bereich des Spundwandelements (4) auf der dem Wasser (10) abgewandten Seite angeordnet ist.

4. Spundwand nach einem der Ansprüche 1 bis 3, **dadurch gekennzeichnet, dass** das Thermoelement (8) im sich im Wasser (10) befindlichen Bereich und im Erdreich befindlichen Bereich des Spundwandelements (4) auf der dem Wasser (10) zugewandten Seite angeordnet ist, wobei insbesondere mindestens ein Drittel des Thermoelements über dem Grund angeordnet ist.

5. Spundwand nach einem der Ansprüche 1 bis 4, **dadurch gekennzeichnet, dass** das Thermoelement beweglich verbindbar ist mit dem Spundwandelement, wobei eine Änderung der vertikalen Position erfolgt in Abhängigkeit des Wasserpegels.

6. Spundwand nach einem der Ansprüche 1 bis 5, **dadurch gekennzeichnet, dass** ein Schutzelement (18) vorgesehen ist, so dass das Thermoelement (8) zumindest teilweise zwischen Schutzelement (18) und Spundwandelement (4) angeordnet ist.

7. Spundwand nach Anspruch 6, **dadurch gekennzeichnet, dass** es sich bei dem Schutzelement (18) um ein Lochblech handelt oder ein weiteres Spundwandelement, welches beabstandet von dem ersten Spundwandelement angeordnet ist.

8. Spundwand nach Anspruch 6 oder 7, **dadurch gekennzeichnet, dass** das Thermoelement (8) und das Verbindungselement (16, 28) mittels dem Schutzelement (18) miteinander verbunden sind.

9. Verfahren zum Nachrüsten einer bereits bestehenden Spundwand (2) mit mindestens einem Spundwandelement (4), mit den Schritten:
Vorsehen einer Vorrichtung (14) zur Wärmegewinnung aus der Umgebung insbesondere zum Einsatz im Tief- und Wasserbau umfassend ein Thermoelement (8) und ein mit dem Thermoelement (8) verbundenes Verbindungselement (16, 28) zur Verbindung mit dem im Erdreich verankerten Spundwandelement (4), wobei das Thermoelement (8) im eingebauten Zustand dem das Thermoelement (8) und/oder dem das Spundwandelement (4) umgebende Wasser (10) oder Erdreich entzogene Wärmeenergie an eine Wärmepumpe (15) weiterleitet und das Thermoelement ausgebildet ist als Wärmerohr oder Wärmetauscher; und
Nachträgliches Verbinden des Verbindungselements (16, 28) mit dem Spundwandelement (4) bzw. der Spundwand (2).

## Claims

1. A sheet piling (2) with a device (14) for recovering heat from the environment in particular for use in civil and hydraulic engineering, and with at least one sheet piling element (4), the device (14) comprising a thermocouple (8) and a connecting element (16, 28) connected to the thermocouple (8) for connection to the sheet piling element (4) anchored in ground, wherein in the installed state the thermocouple (8) is configured to transfer thermal energy drawn from the water (10) or the ground surrounding the thermocouple (8) and/or the sheet piling element (4) to a heat pump (15), and wherein the thermocouple is formed as a heat tube (20) or heat exchanger (22),
**characterized in that**
at least one connecting element (28) is formed as a hook and the sheet piling (4) comprises a loop, wherein connecting to the sheet piling element (4) is performed by hooking up the hook with the loop on the sheet piling element (4) and/or at least one connecting element (28) is formed as a rail and the sheet piling element (4) comprises a rail guide (30), so that connecting to the sheet piling element (4) is performed by inserting the rail into the rail guide (30) at the sheet piling element (4), wherein in the installed state the rail is spaced from a sheet piling lock (42) for the connection of sheet piling elements (4).

2. The sheet piling according to claim 1, **characterized in that** the thermocouple consists of steel alloys, in particular stainless steel, non-ferrous metals or plastic.

3. The sheet piling according to one of claims 1 or 2, **characterized in that** the thermocouple (8) is arranged in the area of the sheet piling element (4) which is exclusively located in water (10) on the side facing the water (10), or that the thermocouple (8) is arranged in the area of the sheet piling element (4) located in the ground on the side facing away from dem water (10).

4. The sheet piling according to one of claims 1 to 3, **characterized in that** the thermocouple (8) is arranged in the area of the sheet piling element (4) which is located in water (10) or in the ground on the side facing the water (10), wherein in particular at least one third of the thermocouple is arranged above the ground.

5. The sheet piling according to one of claims 1 to 4, **characterized in that** the thermocouple is movably connectable to the sheet piling element, wherein a change in the vertical position occurs depending on the water level.

6. The sheet piling according to one of claims 1 to 5, **characterized in that** a protective element (18) is provided such that the thermocouple (8) is arranged at least partially between the protective element (18) and the sheet piling element (4).

7. The sheet piling according to claim 6, **characterized in that** the protective element (18) is a perforated sheet or a further sheet piling element which is arranged at a distance from the first sheet piling element.

8. The sheet piling according to claim 6 or 7, **characterized in that** the thermocouple (8) and the connecting element (16, 28) are connected to each other by means of the protective element (18).

9. A method for retrofitting an already existing sheet piling (2) with at least one sheet piling element (4), comprising the following steps:
providing a device (14) for recovery heat from the environment in particular for use in civil and hydraulic engineering, comprising a thermocouple (8) and a connecting element (16, 28) connected to the thermocouple (8) for connection to the sheet piling element (4) anchored in the ground, wherein in the installed state the thermocouple (8) transfers thermal energy drawn from the water (10) or the ground surrounding the thermocouple (8) and/or the sheet piling element (4) to a heat pump (15), and wherein the thermocouple is formed as a heat tube or heat exchanger; and
subsequent connecting of the connecting element (16, 28) to the sheet piling element (4) or the sheet piling (2), respectively.

## Revendications

1. Rideau de palplanches (2) avec un dispositif (14) de récupération chaleur de l'environnement, en particulier pour utilisation en génie civil et en génie hydraulique, et avec au moins un élément de rideau de palplanches (4), dans lequel le dispositif (14) présente un thermocouple (8) et un élément de connexion (16, 28) connecté au thermocouple (8) destiné à la connexion à l'élément de rideau de palplanches (4) ancré dans la terre,
dans lequel le thermocouple (8) est conçu, à l'état monté, pour transmettre l'énergie thermique extraite de l'eau (10) entourant le thermocouple (8) et/ou l'élément de rideau de palplanches (4) ou de la terre à une pompe à chaleur (15),
et le thermocouple est réalisé en forme de tube de transfert thermique (20) ou d'échangeur de chaleur (22),
**caractérisé par le fait que**
au moins un élément de connexion (28) est réalisé en forme de crochet et l'élément de rideau de palplanches (4) présente un œillet, où la connexion à l'élément de rideau de palplanches (4) a lieu en accrochant le crochet par l'œillet à l'élément de rideau de palplanches (4) et/ou au moins un élément de connexion (28) est réalisé en forme de rail, et l'élément de rideau de palplanches (4) présente un guide-rail (30), de sorte que la connexion à l'élément de rideau de palplanches (4) ait lieu en introduisant le rail dans le guide-rail (30) à l'élément de rideau de palplanches (4), où le rail est, à l'état monté, distant d'une serrure de palplanches (42) destinée à connecter les éléments de rideau de palplanches (4).

2. Rideau de palplanches selon la revendication 1, **caractérisé par le fait que** le thermocouple est réalisé en alliages d'acier, en particulier en acier inoxydable, en métaux non ferreux ou en matière plastique.

3. Rideau de palplanches selon l'une des revendications 1 ou 2, **caractérisé par le fait que** le thermocouple (8) est disposé dans la zone de l'élément de rideau de palplanches (4) se trouvant exclusivement dans l'eau (10) du côté faisant face à l'eau (10) ou que le thermocouple (8) est disposé dans la zone de l'élément de rideau de palplanches (4) se trouvant dans la terre du côté opposé à l'eau (10).

4. Rideau de palplanches selon l'une des revendications 1 à 3, **caractérisé par le fait que** le thermocouple (8) est disposé dans la zone se trouvant dans l'eau (10) et dans la zone de l'élément de rideau de palplanches (4) se trouvant dans la terre du côté faisant face à l'eau (10), dans lequel en particulier au moins un tiers du thermocouple est disposé au-dessus de la terre.

5. Rideau de palplanches selon l'une des revendications 1 à 4, **caractérisé par le fait que** le thermocouple peut être connecté de manière mobile à l'élément de palplanches, dans lequel une modification de la position verticale a lieu en fonction du niveau de l'eau.

6. Rideau de palplanches selon l'une des revendications 1 à 5, **caractérisé par le fait qu'**il est prévu un élément de protection (18), de sorte que le thermocouple (8) soit disposé au moins partiellement entre l'élément de protection (18) et l'élément de rideau de palplanches (4).

7. Rideau de palplanches selon la revendication 6, **caractérisé par le fait qu'**il s'agit, pour l'élément de protection (18), d'une tôle perforée ou d'un autre élément de rideau de palplanches qui est disposé distant du premier élément de rideau de palplanches.

8. Rideau de palplanches selon la revendication 6 ou 7, **caractérisé par le fait que** le thermocouple (8) et l'élément de connexion (16, 28) sont connectés l'un à l'autre au moyen de l'élément de protection (18).

9. Procédé pour perfectionner un rideau de palplanches existant (2) par au moins un élément de rideau de palplanches (4), aux étapes suivantes consistant à:
prévoir un dispositif (14) de récupération de chaleur de l'environnement, en particulier pour utilisation en génie civil et en génie hydraulique, comportant un thermocouple (8) et un élément de connexion (16, 28) connecté au thermocouple (8) destiné à la connexion à l'élément de rideau de palplanches (4) ancré dans la terre,
dans lequel le thermocouple (8) transmet, à l'état monté, l'énergie thermique extraite de l'eau (10) entourant le thermocouple (8) et/ou l'élément de rideau de palplanches (4) ou de la terre à une pompe à chaleur (15) et le thermocouple est réalisé en forme de tube de transfert thermique ou d'échangeur de chaleur; et
connecter ultérieurement l'élément de connexion (16, 28) à l'élément de rideau de palplanches (4) ou au rideau de palplanches (2).
